# EUROPEAN PATENT APPLICATION

(11) **EP 4 633 080 A1**
(43) Date of publication of application: **15.10.2025**
(21) Application number: 24214464.0
(22) Date of filing: 21.11.2024
(51) Int. Cl.: H04L 9/00, H04L 9/30

(54) **METHOD FOR VALIDATING THE SECURITY OF AN OPERATION, COMPUTER-PROGRAM PRODUCT AND INDUSTRIAL DEVICE**

(30) Priority: 09.04.2024 EP 24169252
(71) Applicant: Siemens Aktiengesellschaft, 80333 München (DE)
(72) Inventor: Aghaie, Anita, 81379 Munich (DE); Bauer, Sven, 85591 Vaterstetten (DE); De Santis, Fabrizio, 80634 München (DE); Koleci, Kristjane, 81534 München (DE)
(74) Representative: Siemens Patent Attorneys

(57) **Abstract**

In the method for validating (VAL) the security of an operation involving a number theoretic transform (NTT) the number theoretic transform (NTT) is validated (VAL) carrying out the steps of
- considering a given point of a field and evaluating a first value (f(c)) of a first polynomial (*f*) for the given point
- Computing (CAL) a number theoretic transform of the polynomial
- Computing (COMP) a second value of an interpolated (INT), second, polynomial of the number theoretic transform of the first polynomial for the given point and
- Comparing (CHK) the first value (*f*(*c*)) and the second value (*f*ᵢₙₜ(*c*)) and
- Concluding (VAL) that the number theoretic transform is valid if the first value (f(c)) and the second value (*f*ᵢₙₜ(*c*)) match and/or concluding (VAL) that the number theoretic transform is not valid if the first value (f(c)) and the second value (*f*ᵢₙₜ(*c*)) do not match.

## Description

The invention relates to a method for validating the security of an operation, to a computer-program product and to an industrial device.

Public-key cryptography refers to cryptosystems which employ key-pairs instead of individual secret keys. A key pair consist of a private key, which is only known to its owner, and a public key, which can be distributed publicly to anyone without compromising the security of the cryptosystem. Digital signatures exemplify public-key cryptography, where a message is signed with the sender's private key and can be verified by anyone with access to the corresponding public key of the sender. RSA and elliptic-curve cryptography are two extensively used approaches to public-key cryptography, which are based on the RSA problem and the elliptic-curve discrete logarithm problem, respectively. Presently, no efficient methods are known to solve these problems using classical computing technologies, making it impractical to solve them for adequately large numbers. Nonetheless, quantum algorithms such as Shor's algorithm can solve these problems efficiently with the aid of quantum computers. Therefore, the security of RSA and elliptic-curve cryptographic systems may be at risk of compromise as soon as sufficiently powerful quantum computers are developed in the future.

Post-quantum cryptography pertains to a category of public-key cryptographic algorithms that lack efficient quantum and non-quantum algorithms to solve their underlying mathematical problems. Crystals-Kyber and Crystals-Dilithium have been selected as algorithms to be standardized for post-quantum key encapsulation mechanisms and digital signatures. For instance, Crystals-Kyber and Crystals-Dilithium are lattice-based algorithms based on the learning with errors problem (LWE). Unlike traditional schemes like RSA, ECDH, DSA or ECDSA, many lattice-based algorithms involve polynomial arithmetic over finite fields to compute, e.g., the key generation, encryption and decryption.

The Number Theoretic Transform, sometimes abbreviated NTT in this application and also written in lowercase in this application, is often used to compute polynomial multiplications in lattice-based cryptography. This algorithm takes as input a polynomial and transforms it from the one domain to another one. The inversed transformation is called inversed NTT and denoted as NTT⁻¹. The input of the NTT can be a secret key, thus it is fundamental to protect such operation against fault attacks, e.g., by detecting errors introduced during the computation of the NTT operation. Please note that detecting errors during a cryptographic computation can be also valuable in safety scenarios.

Thus, it is the aim of the present invention to provide an improved method for validating the security of an operation. Furthermore, it is the aim of the present invention to provide an improved computer-program product and an industrial device.

This problem of the invention is solved with a method for validating the security of an operation with the features contained in claim 1, with a method for validating the security of an operation with the features contained in claim 2, with a computer-program product comprising the features listed in claim 10 and with an industrial device comprising the features contained in claim 12. Advantageous aspects of the invention are contained in the respective dependent claims, described in the following description and the attached drawing.

In the method according to the invention for validating the security of an operation involving a number theoretic transform, the number theoretic transform is validated carrying out the steps of
- considering a given point of a field and evaluating a first value of a first polynomial for the given point
- Computing a number theoretic transform of the polynomial
- Computing a second value of an interpolated, second, polynomial of the number theoretic transform of the first polynomial for the given point and
- Comparing the first value and the second value and
- Concluding that the number theoretic transform is valid if the first value and the second value match and concluding that the number theoretic transform is not valid if the first value and the second value do not match.

Advantageously, the method according to the invention provides a lightweight countermeasure to detect errors (e.g., faults) during the computation of a number theoretic transform as a part of an operation. Through comparing the first value and the second value, faults during the computation of a number theoretic transform may be easily detected.

The method according to the invention makes use of the fact that a number theoretic transform of a polynomial maps this polynomial to a number of values of this polynomial.

Thus, the method according to the invention provides an efficient and effective countermeasure against fault attacks. The method according to the invention can advantageously be readily applied to the NIST selected post-quantum algorithms Crystals-Kyber and Crystals-Dilithium, but it can be applied also in other lattice-based cryptographic algorithms using number theoretic transforms, e.g., in some fully-homomorphic encryption schemes.

The method according to the invention may also be applied to ensure that no errors are happening during the NTT computation, e.g., in safety scenarios or extreme working conditions such as due to particular environmental conditions like high temperatures or presence of particular rays. Furthermore, the method according to the invention can be implemented in both hardware and software platforms.

In the alternative or in addition, in the method according to the invention for validating the security of an operation involving an inversed number theoretic transform, the inversed number theoretic transform is validated carrying out the steps of
- choosing a number theoretic transform of a first polynomial for a given point and
- applying an inversed of a number theoretic transform on the number theoretic transform of the first polynomial resulting in the first polynomial,
- evaluating a first value of the first polynomial for the given point,
- computing a second value of an interpolated, second, polynomial of the number theoretic transform of the first polynomial for the given point and
- concluding that the inversed number theoretic transform is valid if the first value and the second value match and concluding that the inversed number theoretic transform is not valid if the first value and the second value do not match.

For this alternative or additional aspect of the invention, the same advantages as for the method as previously described apply.

Each alternative of the methods described above may, in an advantageous aspect of the invention, be carried out multiple times for multiple given points. In particular, the method may be repeated multiple times, each time for a different given point.

In a particularly advantageous aspect of the invention, more than a single chosen point may be considered, e. g. several chosen points.

In a particularly advantageous aspect of the invention, in the method the operation is a cryptographic operation. Advantageously, in several standardized cryptographic algorithms and algorithms currently under standardization, number theoretical transforms are commonly used. Thus, the benefits of the current invention readily apply to cryptographic operations.

In a particularly advantageous aspect of the invention, in the method the operation is a post-quantum cryptographic operation. Advantageously, in currently standardized post-quantum cryptographic algorithms and post-quantum cryptographic algorithms currently under standardization, number theoretical transforms are commonly used. Thus, particularly post-quantum cryptographic operations benefit from the current invention.

In an optional aspect of the method according to the invention, the operation is a lattice-based cryptographic operation.

With this advantageous aspect of the method according to the invention, errors may be particularly efficiently detected, since number theoretic transform operations are a fundamental operation in lattice-based cryptography. Thus, particularly in lattice-based cryptography, relevant portions of the computation may be checked for correctness. The method according to the invention is sufficiently generic in the sense that it may be advantageously applied to many lattice-based cryptographic algorithms using the number theoretic transform as a fundamental operation, e.g., post-quantum cryptographic algorithms standardized in various regions such as upcoming fully-homomorphic encryption schemes based on lattice-based cryptography.

In a particularly advantageous and optional aspect of the method according to the invention, the operation involves carrying out a key encapsulation algorithm, particularly a Kyber algorithm. Additionally, or alternatively, in a particularly advantageous and optional aspect of the method according to the invention, the operation involves carrying out a digital signature algorithm, particularly a Dilithium algorithm. Particularly key encapsulation algorithms and digital signature algorithms such as the Kyber algorithm or the Dilithium algorithm involve the computation of number theoretic transforms.

In an advantageous aspect of the method according to the invention, the method is computer-implemented, and the operation is preferably applied on data, that particularly comprise one or more messages, stored and/or created and/or read by the computer. In this way, the validity of a cryptographic operation on the data, and/or the one or more messages, respectively, may easily be confirmed.

The computer-program product according to the invention comprises program code that can carry out the method as described previously, when carried out on a computer.The industrial device according to the invention is, in an advantageous and preferable aspect, configured to store and/or read data, that preferably comprise one or more messages, and configured to apply the method according to one of the previous claims on the data before and/or after storing and/or reading the data.

The Industrial device according to the invention, comprises in an advantageous aspect of the invention a programmable circuit, particularly a field programmable gate array, that enables the industrial device to carry out the method according to one of the previous claims and to apply it on the data.

The Industrial device comprises the computer-program product described previously and is configured to store and/or read and/or create data, that preferably comprise one or more messages, and is configured to apply the computer-program product described previously and/or a method described previously on the data before and/or after storing and/or reading the data.

In an advantageous aspect of the invention, the industrial device is configured to exchange data, that preferably comprise one or more messages, and configured to apply a computer-program product as described previously and/or a method as described previously on the data before and/or after exchanging the one or more messages.

More technical details, particularly about the case when the polynomial is evaluated at one or more points, can be found in section 3 of the attached draft paper, particularly described as the countermeasure in the steps of section 3.1, which is included into this application by reference. In particular, the additional points are selected with the criterium described in Lemma 3 in chapter 3.

In the following, the invention is described in a more detailed manner with the help of the attached drawing.

Fig. 1 shows an industrial device according to the invention comprising a cryptographic device DEV with a computer-program according to the invention that validates the security of a Dilithium digital signature with a method according to the invention.

Fig. 2 shows the method steps in a schematic diagram.

The industrial device DEV may be a manufacturing device such as a manufacturing control that exchanges data with other devices and stores data, that could comprise secret information that is held to be private and may not be compromised by faulty encryption. In order to ensure the secure storage and exchange of data, the device DEV comprises a cryptography module CNTT comprising computer algorithms that encrypt and decrypt data. The cryptography module CNTT carries out Dilithium digital signature algorithms. The Dilithium digital signature algorithms make repeated use of number theoretic transforms and inversed number theoretic transforms.

Likewise in other embodiments, also Kyber key encapsulation algorithms make repeated use of number theoretic transforms and inversed number theoretic transforms.

The number theoretic transform as well as the inversed number theoretic transforms carried out by the cryptography module CNTT may be compromised. The cryptography module CNTT comprises a computer-program product, that is configured to validate the number theoretic transforms and inversed number theoretic transforms carried out by the cryptography module CNTT.

The security of the cryptography module CNTT and accordingly the security of exchanged and stored data and thus the security of the whole industrial device DEV rely on the security of the number theoretic transforms and inversed number theoretic transforms carried out by the cryptography module CNTT. In further embodiments, which are not explicitly shown and which are in all other respects similar unless otherwise noted, the computer-program validates the security of a Kyber key encapsulation algorithm.

This is done with the following steps of the method according to the invention for validating the security of an operation involving a number theoretic transform:
This method solves the issue of detecting errors (e.g., induced faults) during the computation of a number theoretic transform NTT by using the techniques of polynomial evaluation and interpolation.

The computer-program product checks the validity of a number theoretic transform NTT of a first polynomial *f*(*X*). The computation of the number theoretic transform NTT is checked by interpolating the output of the number theoretic transform NTT of the first polynomial, resulting in a second polynomial.

The first and the second polynomial are evaluated on a set of points, defined for example in a field Fₚ[ [X]/(Xⁿ+1). These points are in addition with respect to the ones already evaluated with the number theoretic transform NTT and thus preferably not identical with the points already evaluated with the number theoretic transform NTT.

The results of the evaluation of the first and the second polynomial on the set of points are then compared. If the results match, the evaluation of the number theoretic transform NTT validated. If the results do not match, the evaluation is not validated.

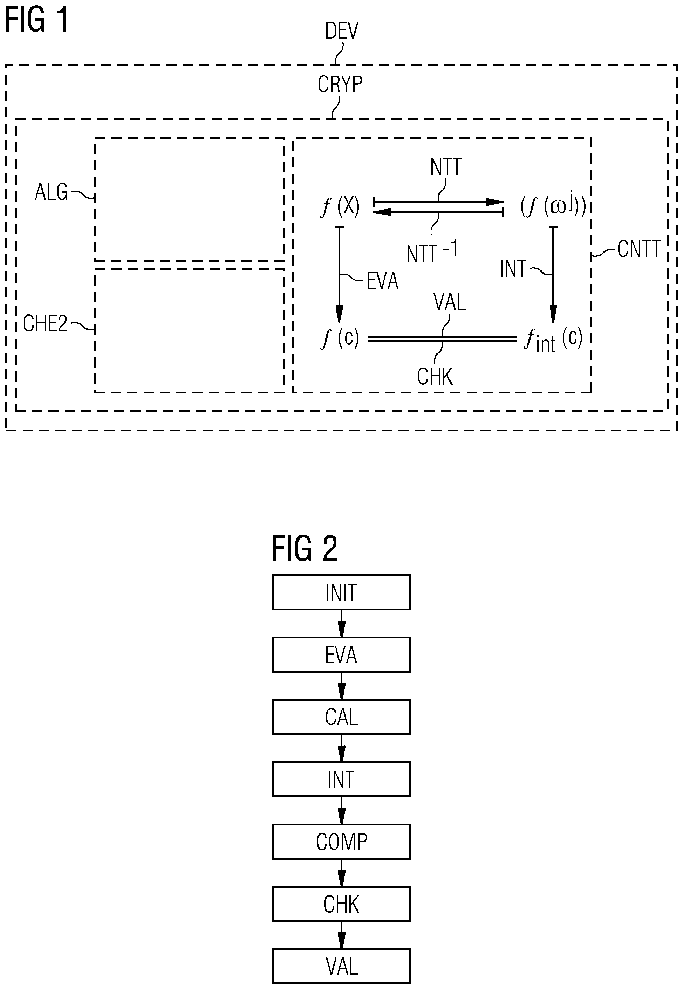

To perform this method, first an initialization step INIT is performed. Within this initialization step INIT, a set of such additional points is selected in the field Fₚ[ [X]/(Xⁿ+1). In Fig. 1, an example point c of the set is chosen and shown.

In an evaluation step EVA, the first polynomial f is evaluated in these selected points, e.g., using Horner's method.

Then, in a calculation step CAL, the number theoretic transform NTT of the first polynomial f is computed, resulting in a set of output values (*f*(*w^{j}*)), which may also be written as NTT(f). The number theoretic transform NTT maps the first polynomial f to this set (*f*(*w^{j}*)) of output values of the first polynomial f.

In an interpolating step INT, this set (*f*(*w^{j}*)) of output values is interpolated to a second polynomial *f*ᵢₙₜ, e.g., using the Lagrange interpolation method.

In a computation step COMP, the second polynomial *f*ᵢₙₜ is evaluated on the set of points mentioned earlier such as the example point c of the number theoretic transform NTT leading to the set of *f*ᵢₙₜ(*c*).

In a verification step CHK, the results of the evaluation step EVA and the computation step COMP are compared. If the results match, i. e. if they are the same, then the number theoretic transform NTT is validated with the validation step VAL. If the results of the evaluation step EVA and the computation step do not match, the validation step VAL ends with an indication of a failure of the validation.

The steps INT and COMP may be combined to make the implementation of the method according to the invention more efficient.

As can be seen in Figure 1, the verification step may not only be performed on the number theoretic transform NTT itself, but also on the inversed number theoretic transform NTT⁻¹ in a similar fashion.

When the method is applied to static keys, thus, for long term keys, the corresponding value of the polynomial evaluated in a single point can be precomputed, since both the point and the polynomial do not change. In Kyber and Dilithium the evaluation of the polynomial in a single point corresponds to the check sum of the polynomial of the secret key, thus this can be stored together with the key pair.

If the point u where the polynomial is evaluated is fixed, then the values of the Lagrange polynomials Lj(u) can be pre-computed, thus accelerating the interpolation step.

More technical details, particularly about the case when the polynomial is evaluated at one or more points, can be found in section 3 of the attached draft paper. In particular, the additional points are selected with the criterium described in Lemma 3 in chapter 3.

In the embodiment shown in the drawing, the cryptography module CNTT is not the only component relevant for cryptographic operations of the industrial device DEV. The industrial device DEV contains more than one cryptography relevant components as a cryptography environment CRYP. The cryptography environment CRYP comprises - besides the cryptography module CNTT other cryptography relevant algorithms ALG a fault detection module CHE2. In further embodiments, fault detection results provided by the fault detection module CHE2 are combined with the verification step CHK. As an example, the validation step VAL may validate the number theoretic transform as valid. However, only in case the fault detection module CHE2 does not detect any faults in the implementation of the algorithms ALG, the validation step validates the validity of the cryptography environment CRYP as a whole as valid.

## Claims

1. Method for validating (VAL) the security of an operation involving a number theoretic transform (NTT), wherein the number theoretic transform (NTT) is validated (VAL) carrying out the steps of
- considering a given point of a field and evaluating a first value (*f*(*c*)) of a first polynomial (*f*) for the given point c
- computing (CAL) a number theoretic transform of the polynomial
- computing (COMP) a second value of an interpolated (INT), second, polynomial of the number theoretic transform of the first polynomial for the given point and
- comparing (CHK) the first value (*f*(*c*)) and the second value (*f*ᵢₙₜ(*c*)) and
- concluding (VAL) that the number theoretic transform is valid if the first value (*f*(*c*)) and the second value (*f*ᵢₙₜ(*c*)) match and/or concluding (VAL) that the number theoretic transform is not valid if the first value (*f*(*c*)) and the second value (*f*ᵢₙₜ(*c*)) do not match.

2. Method for validating the security of an operation involving an inversed number theoretic transform (NTT⁻¹), wherein the inversed number theoretic transform (NTT⁻¹) is validated carrying out the steps of
- choosing a number theoretic transform of a first polynomial (*f*) for a given point and
- applying an inversed of a number theoretic transform (NTT⁻¹) on the number theoretic transform (NTT) of the first polynomial (*f*) resulting in the first polynomial (*f*),
- evaluating a first value (*f*(*c*)) of the first polynomial (*f*) for the given point (*c*),
- computing a second value (*f*ᵢₙₜ(*c*)) of an interpolated, second, polynomial (*f*ᵢₙₜ) of the number theoretic transform (NTT) of the first polynomial (*f*) for the given point and
- concluding that the inversed number theoretic transform (NTT⁻¹) is valid if the first value (*f*(*c*)) and the second value (*f*ᵢₙₜ(*c*)) match and concluding that the inversed number theoretic transform is not valid if the first value (*f*(*c*)) and the second value (*f*ᵢₙₜ(*c*)) do not match.

3. Method according to one of the previous claims, which is carried out multiple times for multiple points c.

4. Method according to one of the previous claims, wherein the operation is a cryptographic operation.

5. Method according to one of the previous claims, wherein the operation is a post-quantum cryptographic operation.

6. Method according to one of the previous claims, wherein the operation is a lattice-based cryptographic operation.

7. Method according to one of the previous claims, wherein the operation involves carrying out a key encapsulation algorithm, particularly a Kyber algorithm.

8. Method according to one of the previous claims, wherein the operation involves carrying out a digital signature algorithm, particularly a Dilithium algorithm.

9. Method according to one of the previous claims, wherein the method is computer-implemented, and the operation is preferably applied on data, that particularly comprise one or more messages, stored and/or created and/or read by the computer.

10. Computer-program product, comprising program code that can carry out the method according to one of the previous claims, when carried out on a computer.

11. Industrial device, configured to store and/or read one or more messages and configured to apply the method according to one of the previous claims on the data, that particularly comprise one or more messages, before and/or after storing and/or reading the data.

12. Industrial device according to the previous claim, comprising a programmable circuit, particularly a field programmable gate array, that enables the industrial device to carry out the method according to one of the previous claims and to apply it onto the data.

13. Industrial device, particularly according to one of the previous claims, comprising a computer-program product according to one of the previous claims, configured to store and/or read and/or create data, that particularly comprise one or more messages, and configured to apply the computer-program product according to one of the previous claims on the data before and/or after storing and/or reading the data.

14. Industrial device, particularly comprising the computer-program product, configured to exchanging data, that particularly comprise one or more messages, and configured to apply the computer-program product according to the previous claim and/or a method according to one of the previous claims on the data before and/or after exchanging the data.
